# EUROPEAN PATENT APPLICATION

(11) **EP 3 395 588 A1**
(43) Date of publication of application: **31.10.2018**
(21) Application number: 16878345.4
(22) Date of filing: 06.12.2016
(51) Int. Cl.: B60C 5/00

(54) **PNEUMATIC TIRE AND TIRE/RIM ASSEMBLY**

(30) Priority: 21.12.2015 JP 2015248840
(71) Applicant: Bridgestone Corporation, Tokyo 104-8340 (JP)
(72) Inventor: KOUNO, Yoshihide, Tokyo 104-8340 (JP); KATAYAMA, Masahiro, Tokyo 104-8340 (JP); HASEGAWA, Keiichi, Tokyo 104-8340 (JP); MATSUMOTO, Yoshifumi, Tokyo 104-8340 (JP)
(74) Representative: Oxley, Robin John George
(86) International application number: PCT/JP2016/086211
(87) International publication number: WO 2017/110452

(57) **Abstract**

In a pneumatic tire, a suppressing member to suppress cavity resonance is fixed to a tire inner face. The suppressing member includes a bulge portion bulging further toward a tire radial direction inner side than the tire inner face so as to provide a space between the bulge portion and the tire inner face.

## Description

### Technical Field

The present disclosure relates to a pneumatic tire and a tire-and-rim assembly.

### Background Art

Japanese Patent Application Laid-Open (JP-A) No. 2003-48407 discloses a structure in which a sponge with an uneven shaped surface is disposed on an inner face of a tire to suppress cavity resonance.

### SUMMARY OF INVENTION

### Technical Problem

However, such conventional sponges are expensive, and so application to a pneumatic tire is sometimes difficult due to cost constraints.

An object of the present disclosure is to reduce cost while suppressing cavity resonance in a pneumatic tire.

### Solution to Problem

A pneumatic tire according to a first aspect includes a suppressing member to suppress cavity resonance. The suppressing member is fixed to a tire inner face. The suppressing member includes a bulge portion bulging further toward a tire radial direction inner side than the tire inner face so as to provide a space between the bulge portion and the tire inner face.

In this pneumatic tire, the suppressing member including the bulge portion is fixed to the tire inner face. A space is provided between the bulge portion and the tire inner face, such that a state arises in which at least part of a circular ring shaped space formed inside the tire is partitioned by the suppressing member. This enables cavity resonance to be inhibited from occurring. The material cost of the suppressing member can be made lower than the material cost of a sponge, enabling the cost to be reduced.

A second aspect is the pneumatic tire according to the first aspect, wherein a maximum height dimension of the suppressing member in the tire radial direction is 50% or more of a tire cross-section height.

In this pneumatic tire, the maximum height dimension of the suppressing member is suitably set, thereby enabling cavity resonance to be further suppressed.

A third aspect is the pneumatic tire according to the first aspect or the second aspect, wherein the suppressing member is formed from a sheet-shaped member.

In this pneumatic tire, the suppressing member is formed from a sheet-shaped member, thereby enabling the cost to be further reduced.

A fourth aspect is the pneumatic tire according to the third aspect, wherein a hole is formed penetrating the suppressing member in a thickness direction of the suppressing member.

In this pneumatic tire, the hole is provided to the suppressing member, so as not to impede the flow of a puncture repair agent when using a puncture repair kit. This enables a puncture to be repaired using a puncture repair kit, even when the suppressing member is provided to the tire inner face.

A fifth aspect is the pneumatic tire according to any one of the first aspect to the fourth aspect, wherein the suppressing member is formed from a resin.

In the pneumatic tire, the suppressing member is easily molded, enabling the cost to be further reduced.

A sixth aspect is the pneumatic tire according to the fifth aspect, further including a tire frame member configured by a resin material.

Inside the pneumatic tire, the tire frame member is configured by a resin material, thereby enabling the resin suppressing member to be easily fixed to the tire inner face by thermal welding or the like.

A tire-and-rim assembly according to a seventh aspect includes a rim, and the pneumatic tire according to any one of the first aspect to the sixth aspect mounted to the rim.

In this tire-and-rim assembly, a circular ring shaped space is formed between the tire and the rim, and at least part of this space is partitioned by the suppressing member. This enables cavity resonance between the tire and the rim to be inhibited from occurring. Advantageous Effects of Invention

The pneumatic tire according to the present disclosure obtains an excellent advantageous effect of enabling cavity resonance in a pneumatic tire to be suppressed at a lower cost than with a sponge.

### BRIEF DESCRIPTION OF DRAWINGS

Fig. 1 is a cross-section illustrating a pneumatic tire according to an exemplary embodiment, in a state sectioned along a tire axial direction.
Fig. 2A is a side view schematically illustrating an example in which a suppressing member is disposed around the entire tire circumferential direction of a pneumatic tire according to the present exemplary embodiment. Fig. 2B a side view schematically illustrating an example in which suppressing members are intermittently disposed around the tire circumferential direction of a pneumatic tire according to the present exemplary embodiment.
Fig. 3 is a perspective view illustrating a first modified example of a suppressing member.
Fig. 4 is a perspective view illustrating a second modified example of a suppressing member.
Fig. 5 is a perspective view illustrating a third modified example of a suppressing member.
Fig. 6 is a perspective view illustrating a fourth modified example of a suppressing member.
Fig. 7 is a perspective view illustrating a fifth modified example of a suppressing member.

### DESCRIPTION OF EMBODIMENTS

Explanation follows regarding an exemplary embodiment of the present invention, based on the drawings. In the drawings, the arrow C direction indicates a pneumatic tire circumferential direction, the arrow R direction indicates a pneumatic tire radial direction, and the arrow W direction indicates a pneumatic tire width direction. The pneumatic tire radial direction refers to a direction orthogonal to a rotation axis (not illustrated in the drawings) of the pneumatic tire. The pneumatic tire width direction refers to a direction parallel to the pneumatic tire rotation axis. The pneumatic tire width direction may also be referred to as the pneumatic tire axial direction. Note that the method for measuring the dimensions of each part is according to the method listed in the Japan Automobile Tire Manufacturer's Association (JATMA) YEAR BOOK 2015.

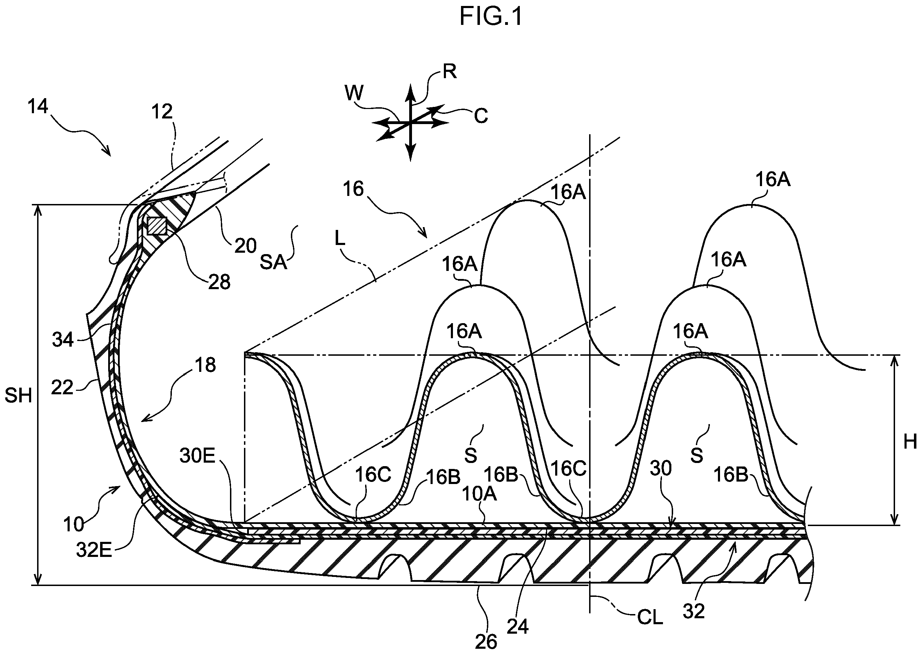

In Fig. 1, a pneumatic tire 10 according to the present exemplary embodiment is configured by a tire-and-rim assembly 14 for mounting to a rim 12. A suppressing member 16 to suppress cavity resonance is fixed to a tire inner face 10A of the pneumatic tire 10. At least part of a circular ring shaped space SA formed inside the pneumatic tire 10 is thereby placed in a state partitioned by the suppressing member 16. The suppressing member 16 is a member to stop cavity resonance from occurring, rather than being a member that absorbs cavity resonance that has already occurred.

### Tire Framework Member

A tire frame member 18 is configured by a resin material, for example. Specifically, the tire frame member 18 is formed in an annular shape around the tire circumferential direction by joining a pair of tire pieces (not illustrated in the drawings) configured by a resin material together in the tire axial direction at a tire equatorial plane CL. Note that the tire frame member 18 may be formed by joining three or more tire pieces together.

The tire frame member 18 includes a pair of bead portions 20, a pair of side portions 22 respectively extending toward the tire radial direction outside from the pair of bead portions 20, and a crown portion 24 extending toward the tire width direction inner side from the side portions 22.

Note that in the tire frame member 18 of the present exemplary embodiment, the portion from a tire radial direction inner side end to 30% of a cross-section height SH is referred to as the bead portion 20, and the portion where a tread 26 is disposed is referred to as the crown portion 24.

A thermoplastic resin, a thermoplastic elastomer (TPE), a thermoset resin, or the like having equivalent elasticity to rubber may be employed as the resin material configuring the tire frame member 18. A thermoplastic elastomer is preferably employed in consideration of elasticity while traveling and moldability during manufacture. Note that the entire tire frame member 18 may be formed of the above resin material, or configuration may be made with only a portion of the tire frame member 18 formed of the above resin material.

Thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), dynamically crosslinked-type thermoplastic elastomers (TPV), or the like may be employed as thermoplastic elastomers.

Moreover, examples of thermoplastic resins include polyurethane resins, polyolefin resins, vinyl chloride resins, and polyamide resins. A thermoplastic resin material having, for example, the characteristics of a deflection temperature under load (when loaded at 0.45 MPa) as defined by ISO 75-2 or ASTM D648 of 78°C or greater, a tensile yield strength as defined by JIS K7113 of 10 MPa or greater, a tensile elongation at break (JIS K7113) of 50% or greater also as defined in JIS K7113, and a Vicat softening temperature (method A) as defined by JIS K7206 of 130°C or greater may be employed.

A bead core 28 is embedded in each of the bead portions 20 of the tire frame member 18. Metals, organic fibers, resin-coated organic fibers, hard resins, and the like may be employed as the material configuring the bead core 28. Note that the bead core 28 may be omitted in cases in which the rigidity of the bead portions 20 is secured and there are no issues with fitting to the rim 12.

### Belt Layer

A belt layer 30 is provided to an outer circumferential face of the crown portion 24. The belt layer 30 is configured by winding a resin-covered cord in a helical shape around the tire circumferential direction, for example. A steel cord may be employed as the cord used in the belt layer 30.

### Belt Upper Reinforcing Layer

A belt reinforcing layer 32 is disposed at the tire radial direction outside of the belt layer 30 so as to cover the belt layer 30. The belt reinforcing layer 32 extends from the tire equatorial plane CL toward tire width direction outsides, so as to extend past end portions 30E of the belt layer 30 and to terminate in the vicinity of boundaries between the side portions 22 and the crown portion 24.

The belt reinforcing layer 32 includes plural reinforcing cords (not illustrated in the drawings) covered in rubber. The reinforcing cords of the belt reinforcing layer 32 are monofilaments (single strands) of organic fibers, or multifilaments (twisted strands) of twisted-together organic fibers, and are arrayed around the tire circumferential direction so as to extend along the tire width direction. Note that the reinforcing cords of the belt reinforcing layer 32 may be inclined at an angle of within 10 degrees with respect to the tire width direction.

A material such as an aliphatic polyamide or polyethylene-terephthalate (PET), glass, or aramid may be employed as the organic fibers. Note that a metal such as steel may be employed as the material of the reinforcing cords. The belt reinforcing layer 32 may be configured by covering the reinforcing cords in resin rather than rubber.

### Side Reinforcing Layer

A side reinforcing layer 34 is disposed on the side of each tire outside face of the tire frame member 18. The side reinforcing layer 34 extends along an outer face of the tire frame member 18 from the tire radial direction inner side of the bead core 28 toward the tire radial direction outside thereof. The side reinforcing layer 34 extends further along the outer face of the belt reinforcing layer 32 toward the tire equatorial plane CL side, so as to extend past an end portion 32E of the belt reinforcing layer 32 and the end portion 30E of the belt layer 30, and terminates in the vicinity of the end portion 30E.

The side reinforcing layer 34 includes plural reinforcing cords covered in rubber. The reinforcing cords of the side reinforcing layer 34 are monofilaments (single strands) of organic fibers, or multifilaments (twisted strands) of twisted-together organic fibers, and are each arrayed around the tire circumferential direction so as to extend along a radial direction (tire radial direction). Note that the reinforcing cords of the side reinforcing layer 34 may be inclined at an angle of within 10 degrees with respect to the tire radial direction.

A material such as an aliphatic polyamide or polyethylene-terephthalate (PET), glass, or aramid may be employed as the organic fibers. Note that a metal such as steel may be employed as the material of the reinforcing cords. The side reinforcing layer 34 may be configured by covering the reinforcing cords in resin rather than rubber.

### Suppressing Member

The suppressing member 16 is a member for suppressing cavity resonance and is formed of sheet-shaped resin, for example. The suppressing member 16 includes bulge portions 16A that bulge toward the tire radial direction inner side from the tire inner face 10A. The suppressing member 16 may also be referred to as a cavity resonance suppressing member, a sound-damping member, a partitioning member, or the like. The bulge portions 16A may also be referred to as projecting portions, jutting-out portions, or the like. The resin configuring the suppressing member 16 is a thermoplastic resin, for example.

The suppressing member 16 also includes bulge portions 16B that bulge in the opposite direction to the bulge portions 16A (i.e. toward the tire radial direction outside). The bulge portions 16B may be configured so as to contact the tire inner face 10A, or so as not to contact the tire inner face 10A. In the example illustrated in Fig. 1, the bulge portions 16B contact the tire inner face 10A and are thermally welded to the tire inner face 10A so as to form fixed portions 16C. Tire width direction positions of the fixed portions 16C preferably lie within a range where the belt layer 30 is formed. This is because there is little tire deformation within the range where the belt layer 30 is formed and so this increases the durability of the fixed portions 16C. The bulge portions 16B are provided between adjacent bulge portions 16A. The suppressing member 16 is, for example, molded from a sheet-shaped resin with a uniform thickness. The bulge portions 16A, 16B are, for example, arranged alternately in both the tire width direction and the tire circumferential direction so as to form an undulating profile. A tire radial direction inner side face of each bulge portion 16B is formed with a concave profile.

Note that not all the bulge portions 16B contacting the tire inner face 10A necessarily include the fixed portions 16C. Although not illustrated in the drawings, the fixed portions 16C may be provided separately to the bulge portions 16B, in a configuration in which the bulge portions 16B do not contact the tire inner face 10A. Further, tire width direction edges of the suppressing member 16 are not limited to being parallel to the tire circumferential direction. There may be a separation between the suppressing member 16 and the tire inner face 10A at the edges of the suppressing member 16. This is because a separation between the suppressing member 16 and the tire inner face 10A facilitates a repairing agent reaching a damaged part when using a puncture repair kit. Moreover, the edges of the suppressing member 16 are not necessarily fixed to the tire inner face 10A.

A space S is provided between each bulge portion 16A and the tire inner face 10A. Spaces S are present between the bulge portions 16B and the tire inner face 10A where the bulge portions 16B are spaced apart from the tire inner face 10A. Specifically, each space S is provided in a region disposed between the fixed portions 16C fixed to the tire inner face 10A and enclosed by an outline of a tire radial direction inner side face of the corresponding bulge portion 16A and by the tire inner face 10A.

A maximum height H of the suppressing member 16 in the tire radial direction is preferably 50% or more of the tire cross-section height SH. The maximum height dimension H is the height in a state in which the suppressing member 16 is fixed to the tire inner face. The reason for such a dimension is because the advantageous effect of suppressing cavity resonance diminishes when the maximum height dimension H is less than 0.5 SH. Note that the double-dotted dashed line L in Fig. 1 schematically indicates an outer profile (maximum dimension) of the suppressing member 16. Although it is preferable that all the bulge portions 16A attain the maximum height H, there may be some bulge portions 16A whose height does not attain the maximum height H, as long as 30% or more of the bulge portions 16A formed to the suppressing member 16 do attain the maximum height H.

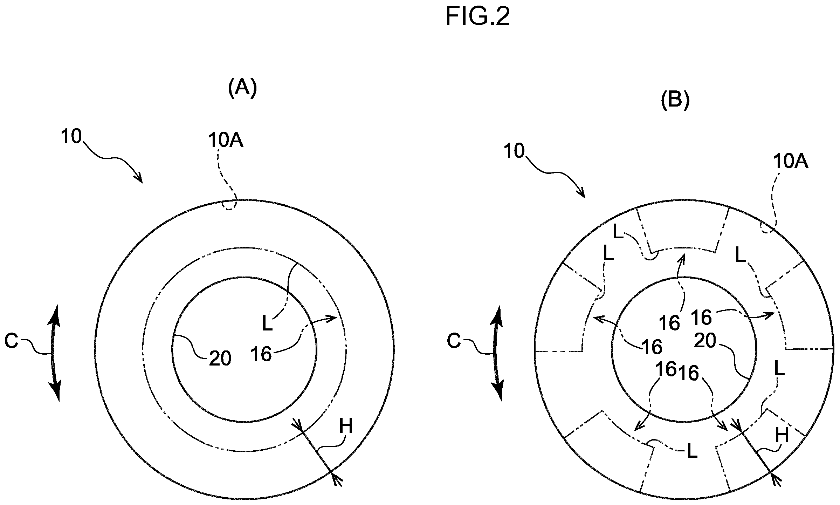

The suppressing member 16 may be disposed around the entire tire circumferential direction as illustrated in Fig. 2A, or may be disposed intermittently around the tire circumferential direction as illustrated in Fig. 2B. When disposed intermittently, a prime number of the individual suppressing members 16 are preferably disposed irregularly around the tire circumferential direction, in consideration of uniformity and so on of the pneumatic tire 10.

### Advantageous Effects

Explanation follows regarding the advantageous effects of the present exemplary embodiment configured as described above. In Fig. 1, the pneumatic tire 10 according to the present exemplary embodiment includes the suppressing member 16 including the bulge portions 16A fixed to the tire inner face 10A. The circular ring shaped space SA is formed between the pneumatic tire 10 and the rim 12 of the tire-and-rim assembly 14. The spaces S are provided between the suppressing member 16 and the tire inner face 10A, such that a state is achieved in which at least part of the circular ring shaped space SA formed inside the pneumatic tire 10 is partitioned by the suppressing member 16. This enables cavity resonance inside the pneumatic tire 10 to be inhibited from occurring. In other words, this avoids the formation of an acoustic space inside the pneumatic tire 10 that causes cavity resonance to occur.

The suppressing member 16 is formed of a resin sheet member, enabling less material to be used than for a sponge and facilitating molding, thereby enabling costs to be reduced. Thus, the pneumatic tire 10 according to the present exemplary embodiment enables cavity resonance to be suppressed at a lower cost than with a sponge.

In the present exemplary embodiment, the maximum height dimension H of the suppressing member 16 is set at 50% or more of the tire cross-section height SH, thereby enabling cavity resonance to be further suppressed.

Moreover, the tire frame member 18 is configured by a resin material, thereby enabling the resin suppressing member 16 to be easily fixed to the tire inner face 10A by thermal welding or the like.

### Other Exemplary Embodiments

An example of an exemplary embodiment of the present invention has been explained above; however, the exemplary embodiments of the present invention are not limited thereto, and obviously various modifications may be implemented within a range not departing from the spirit of the present invention.

Although the tire frame member of the pneumatic tire 10 is configured by a resin material, the pneumatic tire 10 may be a rubber tire employing a carcass ply (not illustrated in the drawings). In such cases, an inner liner film may be provided on the tire inner face 10A, and the suppressing member 16 may be thermally welded to the inner liner film.

Alternatively, the tire inner face 10A may be a rubber inner liner. In such cases, the suppressing member 16 may be fixed to the tire inner face 10A using an adhesive, for example.

Although the suppressing member 16 is formed from a sheet-shaped resin, the material of the suppressing member 16 is not limited thereto, and the material may be a non-woven fabric, a sheet-shaped sponge, a metal plate, or paper. The spaces S between the suppressing member 16 and the tire inner face 10A do not include fine pores such as those formed during foaming of a sponge. In cases in which a sponge is employed as the suppressing member 16, the spaces S are provided between the sponge and the tire inner face 10A.

Configuration of the suppressing member 16 is not limited to that described above, and the configuration of first to fifth modified examples below may be applied. In all of the modified examples, the maximum height dimension H is the same as in the example illustrated in Fig. 1. The shape of the bulge portions 16A is not limited to that in the above exemplary embodiment or in the following modified examples.

### First Modified Example

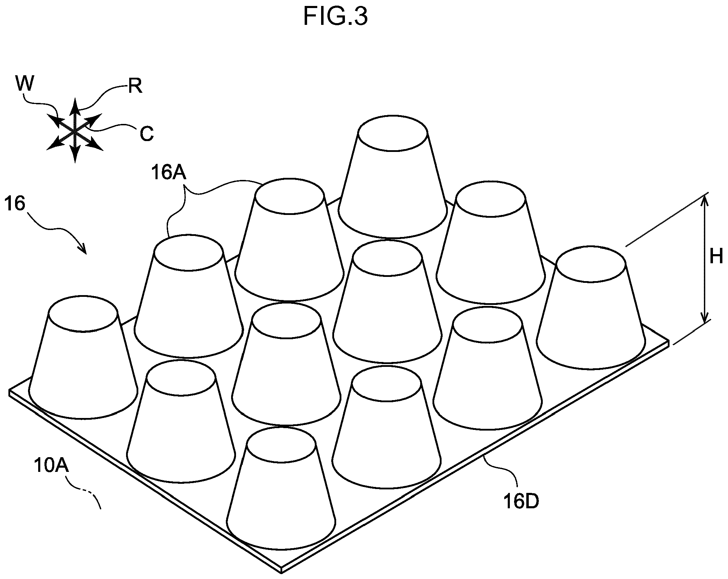

In a first modified example of a suppressing member 16 in Fig. 3, plural bulge portions 16A are provided on a sheet-shaped base portion 16D. The shape of each bulge portion 16A is a frustroconical shape, for example. Parts of the base portion 16D become fixed portions 16C fixed to the tire inner face 10A (Fig. 1).

### Second Modified Example

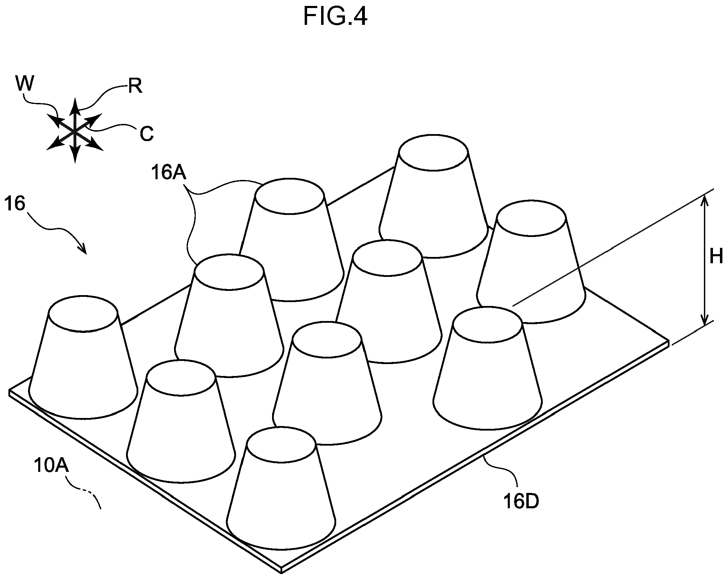

In a second modified example of a suppressing member 16 in Fig. 4, the plural bulge portions 16A of the first modified example illustrated in Fig. 3 are disposed in a staggered pattern.

### Third Modified Example

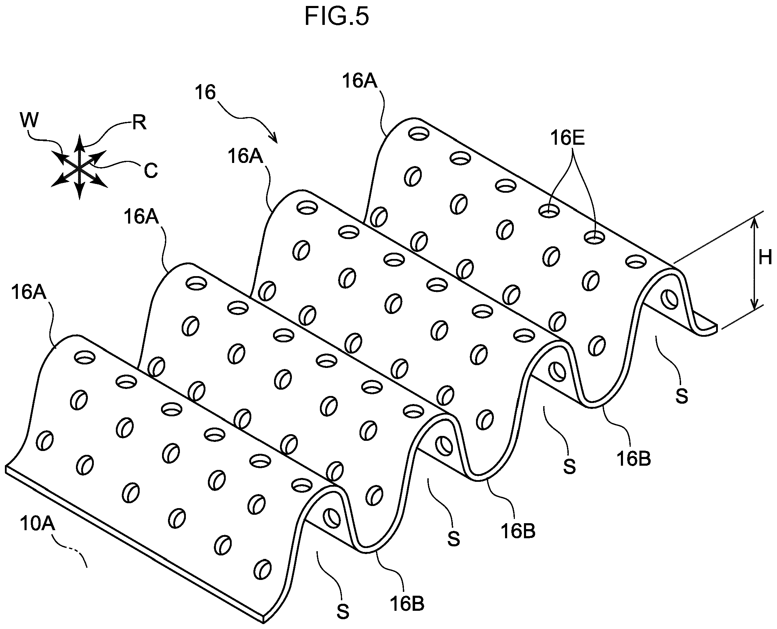

In a third modified example of a suppressing member 16 in Fig. 5, bulge portions 16A and bulge portions 16B are disposed alternately around the tire circumferential direction (arrow C direction) so as to form a wave shape. The bulge portions 16A and the bulge portions 16B are each formed in the shape of a bead extending in the tire width direction (arrow W direction). Plural holes 16E are formed penetrating the suppressing member 16 in the thickness direction. A proportional total area of the holes 16E is not more than 50% with respect to the surface area of the suppressing member 16 in a state without the holes 16E.

In this modified example, the holes 16E are provided in the suppressing member 16 so as not to impede the flow of a puncture repair agent (not illustrated in the drawings) to a damaged part (not illustrated in the drawings) of the tire inner face 10A when using a puncture repair kit. Specifically, a puncture repair agent injected from the tire radial direction inner side (rim 12 side) of the suppressing member 16 is able to pass through the suppressing member 16 via the holes 16E so as to reach the damaged part of the tire inner face 10A (Fig. 1). Thus enables a through-hole (not illustrated in the drawings) from a puncture that penetrates through from the tread 26 to the tire inner face 10A to be blocked by the puncture repair agent. This enables a puncture to be repaired using a puncture repair kit, even when the suppressing member 16 is provided on the tire inner face 10A. Note that the holes 16E may be applied to the above exemplary embodiment and to other modified examples.

### Fourth Modified Example

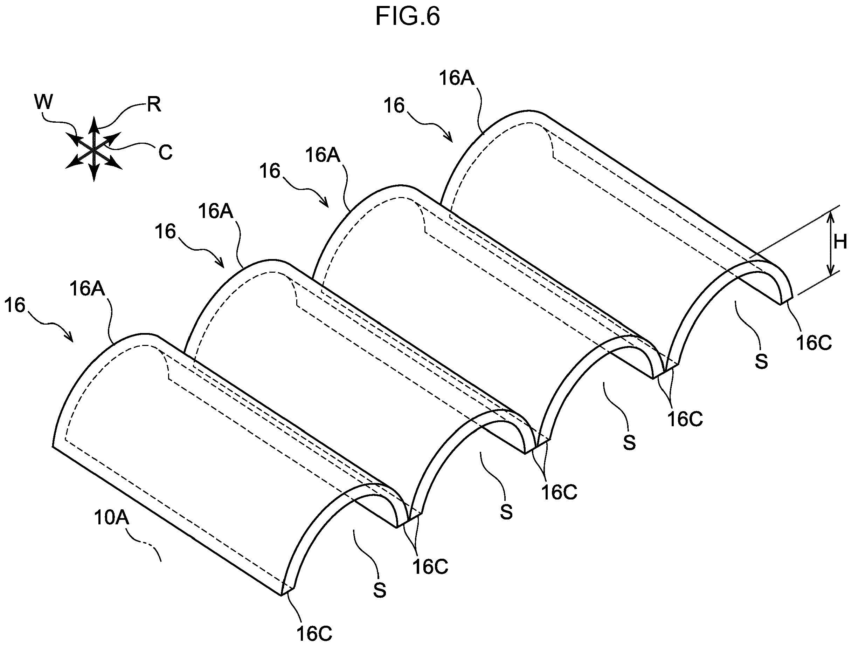

In a fourth modified example of a suppressing member 16 in Fig. 6, each suppressing member 16 extends along the tire width direction (arrow W direction) and has a circular arc shaped cross-section to give a closed cross-section structure. The shape of the suppressing member 16 may be referred to as being that of a circular cylinder split in half along its axial direction. In this example, plural suppressing members 16 are disposed in a row around the tire circumferential direction (arrow C direction). The portion of the suppressing member 16 having a circular arc shaped cross-section configures a bulge portion 16A. In the suppressing member 16, the two end portions of the circular arc shaped cross-section configure fixed portions 16C that are fixed to the tire inner face 10A. Note that the plural suppressing members 16 may be coupled together and integrated into a single unit.

### Fifth Modified Example

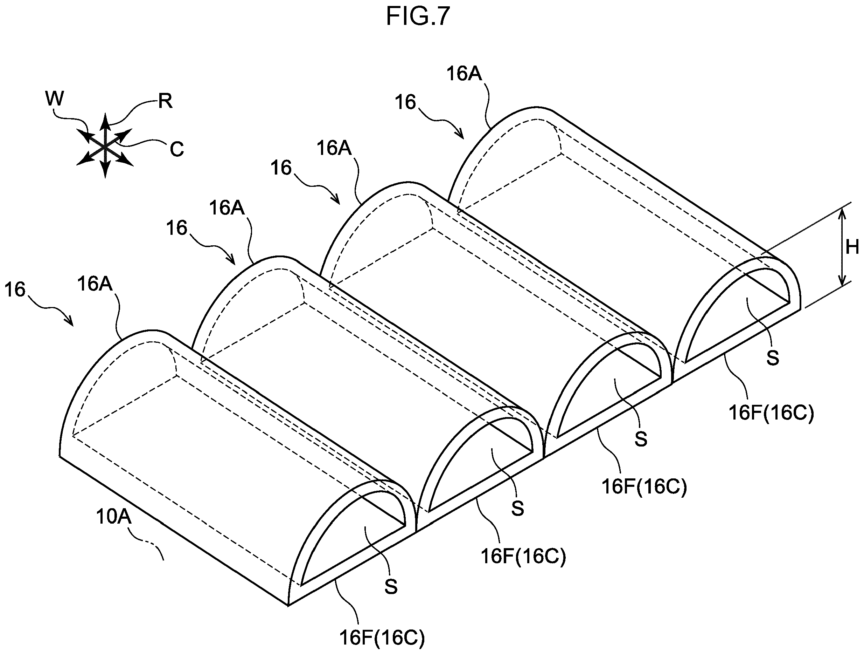

In Fig. 7, in a fifth modified example of a suppressing member, the two end portions of the circular arc shaped cross-section of the fourth modified example illustrated in Fig. 6 are coupled together by a bottom portion 16F, so as to form a closed cross-section structure. A space S is formed between the bulge portion 16A and the bottom portion 16F. At least part of the bottom portion 16F forms a fixed portion 16C that is fixed to the tire inner face 10A. The tire inner face 10A and the space S are divided from each other by the bottom portion 16F. A configuration such as this may be adopted, in which the tire inner face 10A is not exposed to the space S. Note that the plural suppressing members 16 may be coupled together and integrated into a single unit, similarly to in the fourth modified example.

The disclosure of Japanese Patent Application No. 2015-248840, filed on December 21, 2015, is incorporated in its entirety by reference herein.

All cited documents, patent applications, and technical standards mentioned in the present specification are incorporated by reference in the present specification to the same extent as if each cited document, patent application, or technical standard was specifically and individually indicated to be incorporated by reference.

## Claims

1. A pneumatic tire comprising:
a suppressing member to suppress cavity resonance, the suppressing member being fixed to a tire inner face and including a bulge portion bulging further toward a tire radial direction inner side than the tire inner face so as to provide a space between the bulge portion and the tire inner face.

2. The pneumatic tire of claim 1, wherein a maximum height dimension of the suppressing member in the tire radial direction is 50% or more of a tire cross-section height.

3. The pneumatic tire of claim 1 or claim 2, wherein the suppressing member is formed from a sheet-shaped member.

4. The pneumatic tire of claim 3, wherein a hole is formed penetrating the suppressing member in a thickness direction of the suppressing member.

5. The pneumatic tire of any one of claim 1 to claim 4, wherein the suppressing member is formed from a resin.

6. The pneumatic tire of claim 5, further comprising a tire frame member configured by a resin material.

7. A tire-and-rim assembly comprising:
a rim; and
the pneumatic tire of any one of claim 1 to claim 6 mounted to the rim.
